# EUROPEAN PATENT SPECIFICATION

(11) **EP 2 614 029 B1**
(45) Date of publication and mention of the grant of the patent: **19.04.2017**
(21) Application number: 11770478.3
(22) Date of filing: 06.09.2011
(51) Int. Cl.: B62D 33/02, E04G 21/16, B66F 11/04

(54) **MATERIAL HANDLING APPARATUS**
VORRICHTUNG ZUR MATERIALHANDHABUNG
APPAREIL DE MANUTENTION DE MATÉRIELS

(30) Priority: 08.09.2010 GB 201014920
(43) Date of publication of application: 17.07.2013
(73) Proprietor: Bluesky Solutions Limited, Leicestershire LE17 4PN (GB)
(72) Inventor: CUMMINGS, Paul, Oxfordshire OX6 9LA (GB)
(74) Representative: Franks & Co (South) Limited
(86) International application number: PCT/GB2011/001301
(87) International publication number: WO 2012/032284

(56) References cited:
- EP-A1- 2 039 648
- EP-A1- 2 116 669
- EP-A2- 1 873 115
- US-A1- 2004 197 165

## Description

The present invention provides an aerial lift adapted for the handing of ducting.

### Statements of Invention

According to a first aspect of the present invention there is provided an aerial lift having a platform surrounded by a kick plate adjacent the platform with a pair of spaced apart cross members supported on the kick plate and extending transversely of the platform, each cross member being secured to the kick plate and having an upwardly projecting stop at each end thereof for sideways location of material(s) supported on the cross members.

Typically the lift is intended for moving length of rectangular or square section materials such as ducting but could be utilised for moving other objects that will fit onto the cross members between the stops.

The cross members are held in place by engaging with the kick plate on opposite sides of the platform and are held in a stable condition resting on the platform.

Preferably the cross members have a bracket at each end portion thereof for coupling to a respective second bracket standing on the platform and engaging with the kick plate. The kick plate on an aerial lift typically has an upper edge with either an inwardly or an outwardly turned lip which may be further provided with a downwardly turned lip flange. The second bracket used in co-operation with the kick plate may be adapted to engage with the different kick-plates.

Preferably the stops at the end of the cross-members are may be adjustably connected to the cross members for accommodating different widths of material(s) e.g. ducting.

Preferably a pair of spaced apart longitudinal beams are supported on the cross-members and extend beyond the platform for insertion into ducting, or other hollow object, for lifting an manoeuvring the ducting. The beams are adjustably mounted on the cross-members to accommodate different widths of ducting. The distal ends of the two beams are coupled together by a transverse connecting rod.

### Description of the Drawings

The invention will be described by way of example and with reference to the accompanying drawings in which:-
- Fig. 1: is a side elevation of an aerial lift and platform with a duct mounted in situ thereon.
- Fig. 2: is an exploded isometric view of the kick plate and duct carrying assembly according to the present invention,
- Fig. 3: is an isometric view of a cross beam and associated brackets as are used Fig. 2, and
- Fig. 4: is an exploded isometric view of the kick plate and duct carrying assembly as shown in Fig.2 having the longitudinal beams thereon for insertion into ducting for lifting and carrying.

### Detailed Description of the Invention

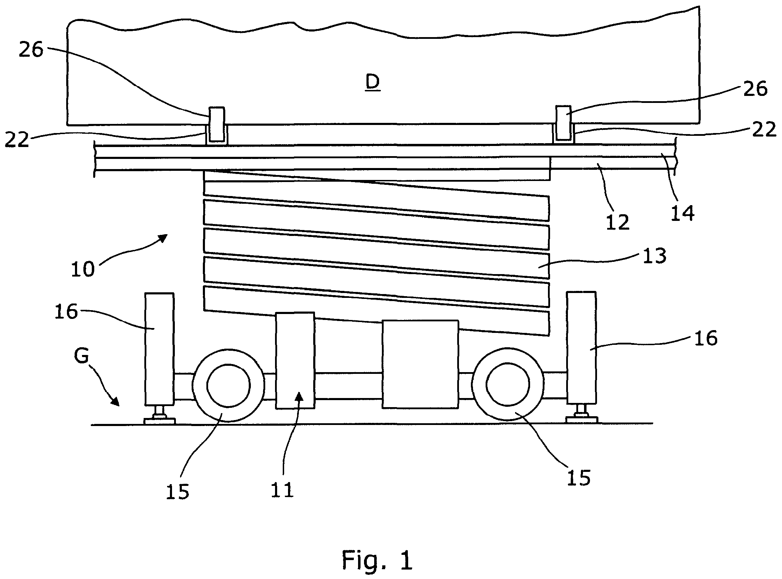

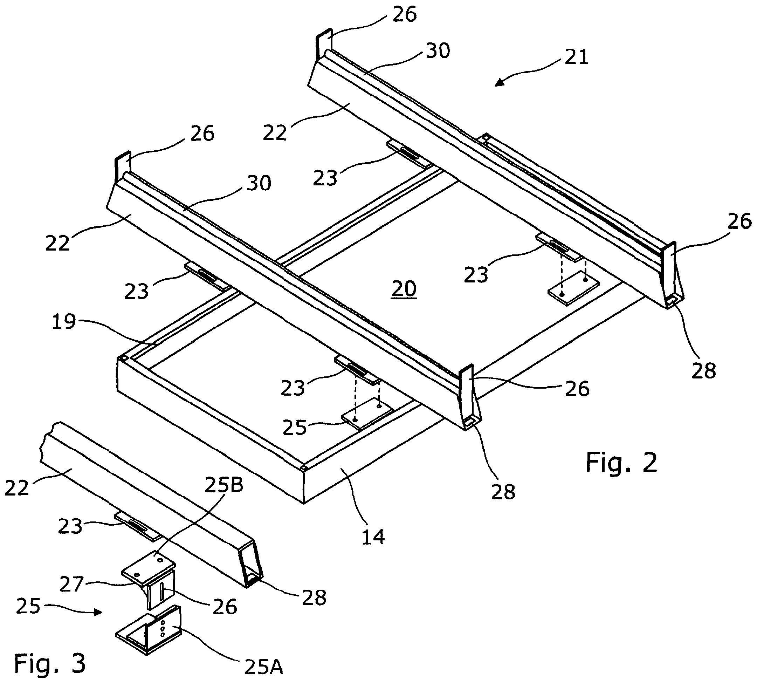

Fig. 1 shows an aerial lift 10 in the form of a self drive mobile scissor lift available from Genie, a suitable lift being a Genie 26/46 scissor with the safety barrier removed. The lift 10 has a drivable vehicle body 11 having wheels 15 and a work platform 12 located on its body and which in use can be raised or lowered relative to the ground G. The platform 12 is shown in a lowered condition and the vehicle body is provided with stabilisers 16 at its corners which are lowered to provide stability during use of the lift. The work platform 12 is raised or lowered by a scissor type mechanism 13 typically operated by a powered hydraulic system provided on the lift. The platform 12 is provided with a kick plate 14 adjacent the platform 12. The kick plate 14 typically has an upper edge with an inwardly and downwardly turned lip 19 (see Fig.2). The aerial lift may be controlled and operated via a remote controller so that no personnel are required on the platform at any time during use.

With reference also to Figures 2 to 4, there is shown a duct carrying assembly 21 mounted on the kick plate 14 of the work platform 12. The duct carrier assembly 21 comprises at least two spaced apart cross beams 22 which extend across the platform 12 and rest on top of the lip 19 of the kick plate 14.

The cross beams 22 are held in place on the kick plate 14 by two spaced apart brackets 23 secured to the cross members by for example welding and which is each fastened to a respective pair of further brackets 25 arranged on the platform floor 20 adjacent the kick plate 14. Each pair of further brackets 25 comprise a lower "L" shaped bracket 25A which sits on the platform floor 20 with its back against the kick plate 14 and an upper "L" shaped bracket 25B which in use engages under the lip 19 of the kick plate 14. The two brackets 25 A & B are mounted back to back with the upper bracket inverted and having an elongate aperture 26 in its back whereby it is adjustably mounted on the lower bracket 25A using suitable fasteners. The upper bracket 25A has a detent 27 on its upper surface which is engagable with the kick plate 14 to hold the pair of bracket on the platform.

Each cross member 22 is secured to the kick plate 14 by respective brackets 23 & 25 on the opposite side of the platform. The cross members 22 are hollow and the ends of the cross-members 22 are provided with safety stops 26 which extend upwardly to facilitate location of ducting D mounted on the cross-members 22. The stops 26 may be detachably and adjustably mounted within the hollow cross-members to facilitate use with different sizes of ducting. A length of tubing 30 or semi circular section tube may be provided on the upper surface of the cross-members 22 to provide point contact with the ducting D to facilitate longitudinal movement of the ducting D when mounted on the carrier assembly 21. The outer end portions of the cross beams are inclined inwardly from the base to provide access to apertures 28 in the end portions of the cross-members which are provided as anchorage points for safety straps.

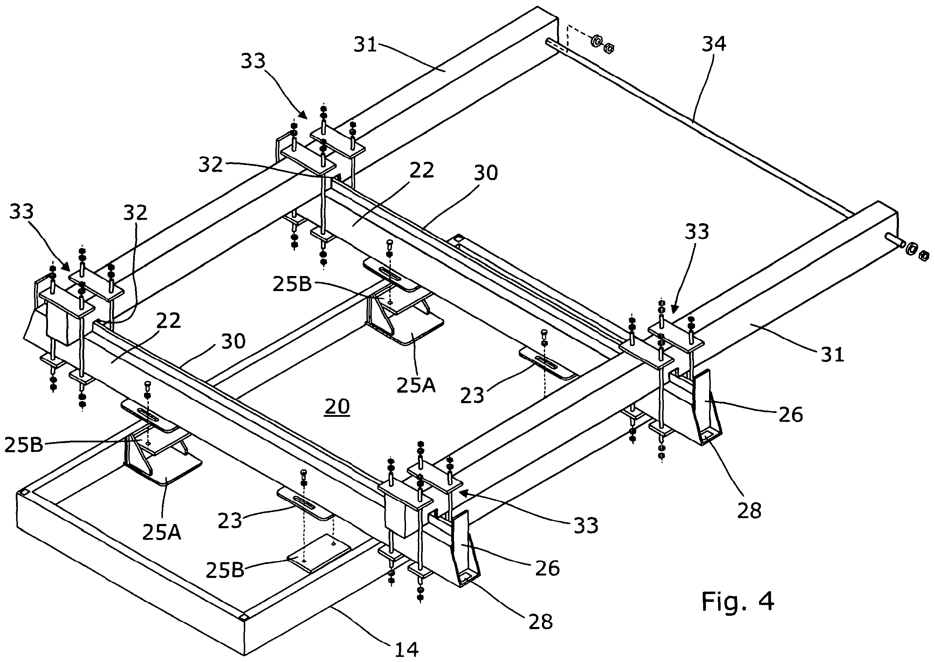

With reference to Figs.4 there is shown the ducting carrier assembly 21 which is further provided with a pair of spaced apart longitudinally extending beams 31 which are mounted on the upper surface of the cross-members 22.The underside of the longitudinal beams are provided with cut-outs 32 to accommodate the tubes 27 and are secured in place by releasable clamps 33. The clamps 33 may be undone to permit repositioning of the longitudinal beams 32 if required or desired.

The two longitudinal beams 32 extend outwardly in one direction beyond the platform 12 to form a fork which can be inserted into a duct, or other hollow object, for lifting and carrying in the manner of a fork lift. The releasable clamps 33 allow the beams to be moved relative to each other to accommodate different widths of ducting. The distal end of the beams 32 are connected together by a rod 34 which serves to strengthen the fork and also prevent the beams 32 from passing to the outside of a duct during insertion.

Typically the lift is intended for moving length of rectangular or square section ducting D as described above. However such a lift but could be utilised for moving other objects that will fit onto the cross members between the stops for example heat exchanger units, or fan units.

## Claims

1. An aerial lift (10) having a platform (12) surrounded by a kick plate (14) adjacent the platform (12), **characterised in that**:
said aerial lift (10) comprises a pair of spaced apart cross members (22) mounted on the kick plate (14) and extending across the platform (12),
each cross member (22) being secured to the kick plate (14) on opposite sides of the platform (12), and
each cross member (22) having an upwardly projecting stop (26) at each end thereof for facilitating location of an object (D) supported on the spaced apart cross members (22).

2. An aerial lift (10) as claimed in claim 1, wherein each cross members (22) is secured to the kick plate (14) by a pair of brackets (23, 25) on each opposite sides of the platform (12).

3. An aerial lift (10) as claimed in claim 1 or claim 2, wherein each cross members (22) has an upper bracket (25A) at each end portion thereof coupled to a respective lower bracket (25B) standing on the platform (12) and engaging with the kick plate (14).

4. An aerial lift (10) as claimed in claim 3, wherein said upper bracket (25A) is adjustably coupled to the respective lower bracket (25B).

5. An aerial lift (10) as claimed in any one of claims 1 to 4, wherein the upwardly projecting stops (26) at the ends of each cross-members (22) are adjustably connected to the cross members (22) for accommodating different sizes of object (D).

6. An aerial lift (10) as claimed in any of claims 1 to 5, and further comprising a pair of spaced apart longitudinal beams (31) mounted on the cross members (22) and extending beyond the platform (12), to the same side of the platform (12), for insertion into hollow objects (D) for lifting and manoeuvring said hollow objects (D).

7. An aerial lift (10) as claimed in claim 6, wherein the longitudinal beams (31) are adjustably mounted on the cross members (22) for accommodating different sizes of hollow object (D).

8. An aerial lift (10) as claimed in claim 6 or claim 7, wherein the distal ends of the pair of spaced apart longitudinal beams (31) are coupled together by a transverse connecting rod (34).

9. An aerial lift (10) as claimed in any one of claims 1 to 8, for the transport of lengths of ducting (D).

10. An aerial lift (10) as claimed in any of claims 1 to 9, wherein the end portions of each cross member (22) define an aperture (28) for providing an anchorage point for a safety strap.

11. An aerial lift (10) as claimed in claim 10, wherein each cross member (22) is a beam having a U-shaped section and the apertures (28) are defined in the base of the U-shaped section.

12. An aerial lift (10) as claimed in claim 11, wherein the side walls of the end portions of each cross member (22) are inclined inwardly for facilitating access to the apertures (28).

13. Carrier apparatus (21) for an aerial lift (10) having a platform (12) surrounded by a kick plate (14) adjacent the platform (12), said carrier apparatus (21) comprising:
a pair of cross members (22) for mounting on the kick plate (14) of the aerial lift (10) such that the cross members (22) extend across the platform (12) at spaced apart locations, each cross member (22) having a safety stop (26)at each end thereof;
an upper bracket (25A) at each end portion of each cross member (22), and
a respective lower bracket (25B) for each upper bracket (25A), said lower bracket (25B) configured to stand on the platform (12) and engage with the kick plate (14) of the aerial lift (10);
said upper brackets (25A) of each cross member (22) and respective lower brackets (25B) for securing the cross member (22) to the kick plate (14) on opposite sides of the platform (12).

14. Carrier apparatus (21) as claimed in claim 13, wherein the safety stops (26) at the ends of each cross member (22) are adjustably connected to the cross member (22).

15. Carrier apparatus (21) as claimed in claim 13 or claim 14, further comprising a pair of longitudinal beams (31) for mounting on the cross members (22) such that the longitudinal beams (31) extend beyond the platform (12), to the same side of the platform (12).

## Patentansprüche

1. Hebebühne (10) mit einer Plattform (12), umgeben von einer Trittplatte (14) neben der Plattform (12), **dadurch gekennzeichnet, dass**:
die Hebebühne (10) ein Paar voneinander beabstandete Querträger (22) umfasst, die an der Trittplatte (14) befestigt sind und sich über die Plattform (12) hinweg erstrecken,
wobei jeder Querträger (22) an einander gegenüberliegenden Seiten der Plattform (12) an der Trittplatte (14) gesichert ist, und
wobei jeder Querträger (22) an jedem Ende davon einen sich nach oben erstreckenden Anschlag (26) aufweist, um das Lokalisieren eines Objekts (D) zu erleichtern, das auf den voneinander beabstandeten Querträgern (22) gelagert ist.

2. Hebebühne (10) nach Anspruch 1, wobei jeder Querträger (22) unter Einsatz eines Paares Halter (23, 25) auf jeder gegenüberliegenden Seite der Plattform (12) an der Trittplatte (14) gesichert ist.

3. Hebebühne (10) nach Anspruch 1 oder 2, wobei jeder Querträger (22) einen oberen Halter (25A) an jedem Endabschnitt davon aufweist, gekoppelt an einen entsprechenden auf der Plattform (12) stehenden unteren Halter (25B) und die Trittplatte (14) in Eingriff nehmend.

4. Hebebühne (10) nach Anspruch 3, wobei der obere Halter (25A) einstellbar an den entsprechenden unteren Halter (25B) gekoppelt ist.

5. Hebebühne (10) nach einem der Ansprüche 1 bis 4, wobei die sich nach oben erstreckenden Anschläge (26) an den Enden jedes Querträgers (22) einstellbar mit dem Querträger (22) verbunden sind, um verschieden große Objekte (D) aufzunehmen.

6. Hebebühne (10) nach einem der Ansprüche 1 bis 5 und ferner umfassend ein Paar voneinander beabstandete Längsstreben (31), befestigt auf den Querträgern (22) und sich zur selben Seite der Plattform (12) hin über die Plattform (12) hinaus erstreckend, zum Einführen in hohle Objekte (D), zum Anheben und Manövrieren der hohlen Objekte (D).

7. Hebebühne (10) nach Anspruch 6, wobei die Längsstreben (31) einstellbar auf den Querträgern (22) befestigt sind, um verschieden große hohle Objekte (D) aufzunehmen.

8. Hebebühne (10) nach Anspruch 6 oder 7, wobei die distalen Enden des Paares von voneinander beabstandeten Längsstreben (31) über eine Verbindungsquerstange (34) aneinander gekoppelt sind.

9. Hebebühne (10) nach einem der Ansprüche 1 bis 8 zum Transportieren von Leitungslängen (D).

10. Hebebühne (10) nach einem der Ansprüche 1 bis 9, wobei die Endabschnitte jedes Querträgers (22) eine Öffnung (28) definieren, um einen Verankerungspunkt für ein Sicherungsband bereitzustellen.

11. Hebebühne (10) nach Anspruch 10, wobei jeder Querträger (22) ein Träger mit einem U-förmigen Abschnitt ist und die Öffnungen (28) in der Basis des U-förmigen Abschnitts ausgebildet sind.

12. Hebebühne (10) nach Anspruch 11, wobei die Seitenwände der Endabschnitte jedes Querträgers (22) nach innen geneigt sind, um Zugang zu den Öffnungen (28) zu erleichtern.

13. Trägervorrichtung (21) für eine Hebebühne (10) mit einer Plattform (12), umgeben von einer Trittplatte (14) neben der Plattform (12), wobei die Trägervorrichtung (21) Folgendes umfasst:
ein Paar Querträger (22) zum Befestigen der Trittplatte (14) der Hebebühne (10) derart, dass die Querträger (22) sich an voneinander beabstandeten Stellen über die Plattform (12) erstrecken, wobei jeder Querträger (22) an jedem Ende davon einen Sicherheitsanschlag (26) aufweist;
einen oberen Halter (25A) an jedem Endabschnitt jedes Querträgers (22), und
einen entsprechenden unteren Halter (25B) für jeden oberen Halter (25A), wobei der untere Halter (25B) konfiguriert ist, auf der Plattform (12) zu stehen und die Trittplatte (14) der Hebebühne (10) in Eingriff zu nehmen;
wobei sich die oberen Halter (25A) jedes Querträgers (22) und jeweilige untere Halter (25B) zum Sichern der Querträger (22) an der Trittplatte (14) auf einander gegenüberliegenden Seiten der Plattform (12) befinden.

14. Trägervorrichtung (21) nach Anspruch 13, wobei die Sicherheitsanschläge (26) an den Enden jedes Querträgers (22) einstellbar mit dem Querträger (22) verbunden sind.

15. Trägervorrichtung (21) nach Anspruch 13 oder 14, ferner umfassend ein Paar Längsstreben (31) zum Befestigen an den Querträgern (22), sodass sich die Längsstreben (31) zur selben Seite der Plattform (12) hin über die Plattform (12) hinaus erstrecken.

## Revendications

1. Nacelle élévatrice (10) ayant une plateforme (12) entourée d'une plaque de protection (14) adjacente à la plateforme (12), **caractérisée en ce que** :
ladite nacelle élévatrice (10) comprend une paire de traverses espacées (22) montées sur la plaque de protection (14) et s'étendant à travers la plateforme (12),
chaque traverse (22) étant fixée à la plaque de protection (14) sur des côtés opposés de la plateforme (12), et
chaque traverse (22) ayant une butée saillant vers le haut (26) à chacune de ses extrémités pour faciliter une localisation d'un objet (D) supporté sur les traverses espacées (22).

2. Nacelle élévatrice (10) selon la revendication 1, dans laquelle chaque traverse (22) est fixée à la plaque de protection (14) par une paire de supports (23, 25) sur chaque côté opposé de la plateforme (12).

3. Nacelle élévatrice (10) selon la revendication 1 ou la revendication 2, dans laquelle chaque traverse (22) a un support supérieur (25A) à chacune de ses parties d'extrémité couplé à un support inférieur (25B) respectif se tenant à la verticale sur la plateforme (12) et s'enclenchant avec la plaque de protection (14).

4. Nacelle élévatrice (10) selon la revendication 3, dans laquelle ledit support supérieur (25A) est couplé de façon réglable au support inférieur (25B) respectif.

5. Nacelle élévatrice (10) selon l'une quelconque des revendications 1 à 4, dans laquelle les butées saillant vers le haut (26) aux extrémités de chaque traverse (22) sont reliées de façon réglable à la traverse (22) pour accueillir différentes tailles d'objet (D).

6. Nacelle élévatrice (10) selon l'une quelconque des revendications 1 à 5, et comprenant en outre une paire de poutres longitudinales espacées (31) montées sur les traverses (22) et s'étendant au-delà de la plateforme (12), du même côté de la plateforme (12), pour une insertion dans des objets creux (D) afin de lever et de manoeuvrer lesdits objets creux (D).

7. Nacelle élévatrice (10) selon la revendication 6, dans laquelle les poutres longitudinales (31) sont montées de façon réglable sur les traverses (22) pour accueillir des tailles différentes d'objet creux (D).

8. Nacelle élévatrice (10) selon la revendication 6 ou la revendication 7, dans laquelle les extrémités distales de la paire de poutres longitudinales espacées (31) sont couplées ensemble par une tringle de liaison transversale (34).

9. Nacelle élévatrice (10) selon l'une quelconque des revendications 1 à 8, pour le transport de longueurs de canalisations (D).

10. Nacelle élévatrice (10) selon l'une quelconque des revendications 1 à 9, dans laquelle les parties d'extrémité de chaque traverse (22) définissent une ouverture (28) pour fournir un point d'accès pour une sangle de sécurité.

11. Nacelle élévatrice (10) selon la revendication 10, dans laquelle chaque traverse (22) est une poutre ayant une section en forme de U et les ouvertures (28) sont définies dans la base de la section en forme de U.

12. Nacelle élévatrice (10) selon la revendication 11, dans laquelle les parois latérales des parties d'extrémité de chaque traverse (22) sont inclinées vers l'intérieur pour faciliter un accès aux ouvertures (28).

13. Appareil porteur (21) pour une nacelle élévatrice (10) ayant une plateforme (12) entourée d'une plaque de protection (14) adjacente à la plateforme (12), ledit appareil porteur (21) comprenant :
une paire de traverses (22) pour un montage sur la plaque de protection (14) de la nacelle élévatrice (10) de sorte que les traverses (22) s'étendent à travers la plateforme (14) en des emplacements espacés, chaque traverse (22) ayant une butée de sécurité (26) à chacune de ses extrémités ;
un support supérieur (25A) à chaque partie d'extrémité de chaque traverse (22), et
un support inférieur (25B) respectif pour chaque support supérieur (25A), ledit support inférieur (25B) étant configuré pour se tenir à la verticale sur la plateforme (12) et s'enclencher avec la plaque de protection (14) de la nacelle élévatrice (10) ;
lesdits supports supérieurs (25A) de chaque traverse (22) et les supports inférieurs (25B) respectifs étant destinés à fixer la traverse (22) à la plaque de protection (14) sur des côtés opposés de la plateforme (12).

14. Appareil porteur (21) selon la revendication 13, dans lequel les butées de sécurité (26) aux extrémités de chaque traverse (22) sont reliées de façon réglable à la traverse (22).

15. Appareil porteur (21) selon la revendication 13 ou la revendication 14, comprenant en outre une paire de poutres longitudinales (31) pour un montage sur les traverses (22) de sorte que les poutres longitudinales (31) s'étendent au-delà de la plateforme (12), du même côté de la plateforme (12).
